# EUROPÄISCHE PATENTANMELDUNG

(11) **EP 1 106 450 A2**
(43) Veröffentlichungstag der Anmeldung: **13.06.2001**
(21) Anmeldenummer: 00125897.9
(22) Anmeldetag: 27.11.2000
(51) Int. Cl.: B60R 25/00, E05B 49/00

(54) **Vorrichtung zur Aktivierung und/oder Deaktivierung einer Sicherheitseinrichtung**

(30) Priorität: 03.12.1999 DE 19958145
(71) Anmelder: Mannesmann VDO AG, 60388 Frankfurt am Main (DE)
(72) Erfinder: Lässle, Hans-Peter, 61250 Usingen (DE); Schmid, Dietmar, 65606 Villmar (DE)
(74) Vertreter: Rassler, Andrea, Dipl.-Phys.

(57) **Zusammenfassung**

Die Erfindung betrifft eine Vorrichtung zur Aktivierung und/oder Deaktivierung einer Sicherheitseinrichtung, insbesondere einer Zugangseinrichtung für ein Kraftfahrzeug, mit einer tragbaren Sendeeinheit zum Senden einer codierten Information, welche von einer Empfängervorrichtung empfangen und mit einer vorgegebenen codierten Information verglichen wird, wobei von der Empfängervorrichtung im Fall der Übereinstimmung beider Informationen ein Ansteuersignal an die Sicherheitseinrichtung abgebbar ist.

Bei einer Vorrichtung, welche auch bei Störungen der Übertragungsstrekke zuverlässig und abhörsicher arbeitet, strahlt die tragbare Sendeeinheit (1) zum Aufbau einer bidirektionalen Datenübertragungsstrecke eine Reizsequenz (A) aus, welche nach dem Empfang durch die Empfängereinrichtung (2) mit einem Rückmeldesignal (B) beantwortet wird, wobei die tragbare Sendeeinheit (1) nach Erhalt des Rückmeldesignals (B) die codierte Information (C) aussendet.

## Beschreibung

Die Erfindung betrifft eine Vorrichtung zur Aktivierung und/oder Deaktivierung einer Sicherheitseinrichtung, insbesondere einer Zugangseinrichtung für ein Kraftfahrzeug, mit einer tragbaren Sendeeinheit zum Senden einer codierten Information, welche von einer Empfängervorrichtung empfangen und mit einer vorgegebenen codierten Information verglichen wird, wobei von der Empfängervorrichtung im Fall der Übereinstimmung beider Informationen ein Ansteuersignal an die Sicherheitseinrichtung abgebbar ist.

Bekannte Vorrichtungen zur Aktivierung und/oder Deaktivierung eines Schließsystems in einem Kraftfahrzeug besitzen einen tragbaren Sender, welcher nach Aufforderung eine codierte Information an eine Empfängereinrichtung aussendet, die fest im Kraftfahrzeug installiert ist. Die Empfängereinrichtung vergleicht die übertragene codierte Information mit einer in ihr erzeugten Information. Bei Übereinstimmung beider Informationen wird das Schließsystem durch die Empfängereinrichtung angesteuert.

Um sicherzustellen, dass nur ganz bestimmte Sender eine Zentralverriegelungsanlage ent- bzw. verriegeln können, sind die Übertragungsprotokolle mit einer Zuordnung versehen. Diese Zuordnung besteht aus einem Festcode und einem Wechselcode.

Zur Berechnung der jeweils nächsten Wechselcodewerte wird im Sender und im Empfänger der gleiche Algorithmus verwendet. Dabei besitzt der Empfänger zur Ent- bzw. Verriegelung einen sogenannten Fangbereich, welcher immer mehrere in der Zukunft liegende codierte Informationen als gültig zuläßt. Der Wechselcode wird im Sender durch Anforderung geändert, im Empfänger hingegen bei Empfang einer gültigen Information mit dem des Senders gleichgesetzt. Somit kann es vorkommen, dass, wenn mehrere codierte Informationen des Senders den Empfänger nicht erreichen, eine zulässige codierte Information außerhalb des Fangbereiches des Empfängers liegt und vom Empfänger nicht erkannt wird.

Insbesondere bei der Verwendung von Funkfernbedienungen, wo codierte Informationen über weite Entfernungen mit Hilfe eines Funksignales transportiert werden, kann durch Störungen innerhalb der Übertragungsstrecke der Empfang der vom Sender ausgesandten codierten Information durch den Empfänger beeinträchtigt oder ganz unterbrochen sein.

Sollte es außerdem gelingen, eine vom Empfänger nicht empfangene Information abzuhören, aufzuzeichnen und zur unbefugten Öffnung des Kraftfahrzeuges zu verwenden, ist eine zuverlässige Arbeitsweise der Sicherheitseinrichtung nicht gewährleistet.

Der Erfindung liegt somit die Aufgabe zugrunde, eine Vorrichtung zur Aktivierung und/oder Deaktivierung einer Sicherheitseinrichtung anzugeben, welche auch bei Störungen der Übertragungsstrecke zuverlässig und abhörsicher arbeitet.

Erfindungsgemäß wird die Aufgabe dadurch gelöst, dass die tragbare Sendeeinheit zum Aufbau einer bidirektionalen Datenübertragungsstrecke eine Reizsequenz ausstrahlt, welche nach dem Empfang durch die Empfängereinrichtung mit einem Rückmeldesignal beantwortet wird, wobei die tragbare Sendeeinheit nach Erhalt des Rückmeldesignales die codierte Information aussendet.

Durch den Aufbau einer bidirektionalen Funkverbindung werden zunächst erst einmal Sender und Empfänger aktiviert und auf die Aussendung bzw. den Empfang einer codierten Information vorbereitet. Der tatsächliche Austausch erfolgt aber erst dann, wenn eine bevorstehende Übertragung einer codierten Information sowohl vom Sender als auch vom Empfänger erkannt worden ist.

Insbesondere besteht der Vorteil der Erfindung darin, dass der Aufbau der Datenübertragungsstrecke durch codelose Signalbestandteile erfolgt. Werden diese Signale abgehört, können sie nicht zur Aktivierung bzw. Deaktivierung der Sicherheitseinrichtung genutzt werden.

Sollte beim Aufbau der bidirektionalen Funkverbindung ein Störsignal den Empfang der Reizsequenz durch den Empfänger verhindern, wird aufgrund der Nichtaussendung des Rückmeldesignals die Aussendung der codierten Information unterlassen.

Vorteilhafterweise werden die Reizsequenz, das Rückmeldesignal und die codierte Information in annähernd dem gleichen Frequenzbereich gesendet, wodurch im Sender und im Empfänger nur eine Sende/Empfangseinheit erforderlich ist.

In einer Weiterbildung der Erfindung ist in der tragbaren Sendeeinheit und in der Empfängervorrichtung jeweils ein Codegenerator angeordnet, wobei der erste Codegenerator der tragbaren Sendeeinheit die zu übertragende codierte Information und der zweite Codegenerator der Empfängervorrichtung die vorgegebene codierte Information erzeugt, wobei beide Codegeneratoren nach dem gleichen Algorithmus arbeiten. Dabei können jeweils eine oder mehrere voneinander unabhängige Zufallszahlen als Code dienen, die nach bestimmten Rechenregeln bearbeitet und im Empfänger miteinander verglichen werden.

Bei einer besonders einfachen Ausgestaltung wird der Algorithmus zur mehrmaligen Abwandlung der zu übertragenden codierten Information und der vorgegebenen codierten Information verwendet. Der Algorithmus und die Zahl seiner Anwendungen können derart gewählt werden, dass eine Errechnung der als nächstes zu verwendenden Codierung mit den vorher abgenommenen codierten Informationen vor Anwendung einer neuen Zufallszahl unmöglich ist.

Alternativ dazu kann der Algorithmus zur Abwandlung der zu übertragenden codierten Information und der vorgegebenen codierten Information nach jeder Aktion der tragbaren Sendeeinheit geändert werden.

Die Abhörsicherheit des Systems wird dadurch weiter erhöht, dass der erste und zweite Codegenerator zeitgesteuert die zu übertragende codierte Information und die vorgegebene codierte Information weiterschalten. Dabei ist der Zeittakt des ersten Codegenerators der tragbaren Sendeeinheit höher zu wählen als der Zeitakt des zweiten Codegenerators der Empfängereinrichtung, um zu gewährleisten, dass die von der tragbaren Sendeeinheit ausgesandten codierten Informationen aus Sicht der Empfängervorrichtung immer in der Zukunft liegen, damit sie als zulässige Codierungen sicher erkannt werden können.

Um zu verhindern, dass nach einer bestimmten Zeit der Fangbereich der Empfängervorrichtung durch die codierte Information der tragbaren Sendeeinheit überschritten wird, werden der erste und der zweite Codegenerator nach Ausgabe des Ansteuersignals durch die Empfängereinrichtung auf einen gemeinsamen Wert gesetzt.

Sollte die Datenübertragungsstrecke zwischen tragbarer Sendeeinheit und Empfänger gestört sein, so wird bei Ausbleiben eines den Empfang der codierten Information bestätigenden Quittierungssignales der Empfängereinrichtung der erste Codegenerator der tragbaren Sendeeinheit weitergeschaltet. Bei Ausbleiben der zu übertragenden codierten Information trotz Aussendung des Rückmeldesignals wird der zweite Codegenerator der Empfängervorrichtung ebenfalls weitergeschaltet.

Dies hat den Vorteil, dass die Unterbrechung der Datenstrecke sowohl von der Sendeeinheit als auch vom Empfänger detektiert werden kann. Im Falle der Empfängervorrichtung wurde eine Datenverbindung aufgebaut, jedoch keine codierte Information empfangen. Im Falle der tragbaren Sendeeinheit wurde eine Datenverbindung aufgebaut, aber kein Rückmeldesignal über den Erhalt der Reizsequenz empfangen.

In einer vorteilhaften Ausgestaltung werden der erste und der zweite Codegenerator um die gleiche Anzahl von Schritten weitergeschaltet. Da beide Einrichtungen weiterschalten, bleibt die Vorrichtung in Funktion, d. h. die aufgezeichneten Protokolle werden in die Vergangenheit geschoben und neu übertragene codierte Informationen befinden sich aus Sicht des Empfängers in der Zukunft und können somit zur Aktivierung bzw. Deaktivierung der Sicherheitseinrichtung zugelassen werden.

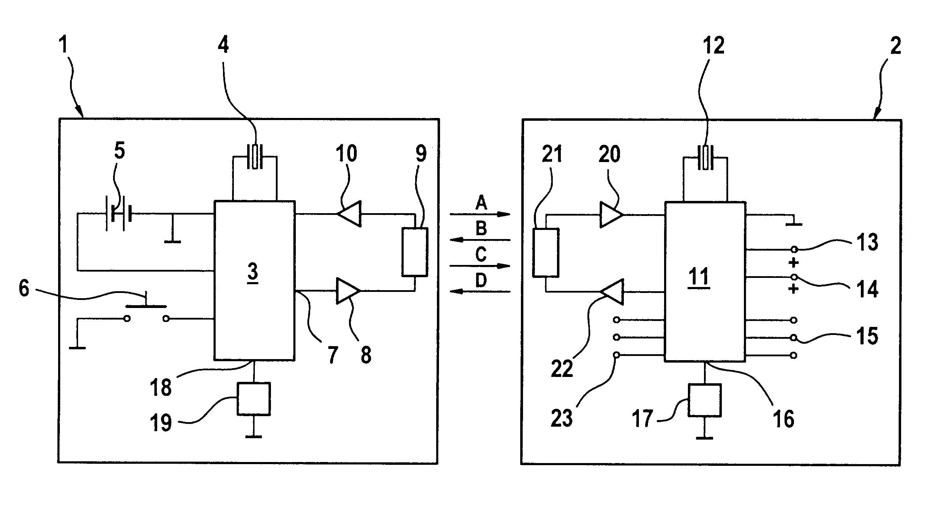

Die Erfindung lässt zahlreiche Ausführungsformen zu. Eine davon soll anhand der in der Zeichnung dargestellten Figur erläutert werden.

Die tragbare Sendeeinheit 1 umfaßt einen Mikrocomputer 3, welchem ein Schwingquarz 4 zur Takterzeugung zugeordnet ist. Zur Stromversorgung dient eine Batterie 5, welche zur Erzielung einer geringen Baugröße der Vorrichtung als Knopfzelle ausgebildet ist. Ein Tastschalter 6 dient zum Einschalten der Sendevorrichtung. Darüber hinaus ist der Mikrocomputer 3 über seinen Eingang 18 mit einem Zufallsgenerator 19 verbunden.

Der Ausgang 7 des Mikrocomputers 3 führt zur Aussendung von Funksignalen über einen Verstärker 8 zu einer Antenne 9. Zum Empfang von Funksignalen ist die Antenne 9 über einen weiteren Verstärker 10 mit dem Mikrocomputer 3 verbunden. Die Empfängervorrichtung 2 weist ebenfalls einen Mikrocomputer 11 mit einem Schwingquarz 12 auf. Über den Anschluß 13 ist der Mikrocomputer 11 an die Stromquelle des Kraftfahrzeuges (Klemme 13) angeschlossen. Der Anschluß 14 ist mit dem Zündschalter (Klemme 15) des Kraftfahrzeuges verbunden, so dass bei jedem Startvorgang eine Ansteuerung des Mikrocomputers 11 erfolgt. Die Eingänge 15 des Mikrocomputers 11 sind jeweils einer in einer Tür des Kraftfahrzeuges angeordneten Schließvorrichtung zugeordnet und können durch mechanische Betätigung mittels eines Schlüssels zu einer Ansteuerung des Mikrocomputers 11 genutzt werden, wenn die Normalfunktion der Steuervorrichtung gestört ist. An einem weiteren Eingang 16 des Mikrocomputers 11 ist ebenfalls ein eine Zufallsimpulsfolge erzeugender Generator 17 angeschlossen. Über einen Verstärker 20 und einen Verstärker 22 ist eine Sende-/Empfangsantenne 21 an den Mikroprozessor 11 angeschlossen. Jeder der drei Anschlüsse 23 des Mikrocomputers 11 führt zu der Schließvorrichtung der Zentralverriegelung des Kraftfahrzeuges und überträgt das vom Mikrocomputer 11 abgegebene Ansteuersignal.

Die Bildung der codierten Information erfolgt mit Hilfe eines Festcodes und eines Wechselcodes. Der Wechselcode wird mit Hilfe der von dem Zufallsgenerator 19, 17 generierten Zufallszahl und dem im Mikroprozessor gespeicherten Algorithmus erzeugt. Der Wert des Wechselcodes wird in der tragbaren Sendeeinheit 1 durch ein bestimmtes Ereignis verändert, z. B. nach jeder Betätigung des Tastschalters 6.

In der Empfängereinrichtung 2 werden die Werte des Wechselcodes in zugelassene und nicht zugelassene unterteilt. Dabei gilt immer, dass die zugelassenen Werte in der Zukunft liegen und die nicht zugelassenen Werte in der Gegenwart und in der Vergangenheit. Die Trennlinie dieser Bereiche wird durch den aktuellen Wert des Wechselcodes und den Fangbereich bestimmt, wobei der aktuelle Wert der Gegenwart und der Fangbereich einer vorgegebenen Anzahl von zukünftigen der zu übertragenden codierten Informationen entspricht.

Die Einrichtung arbeitet wie folgt:

Durch Betätigung des Tastschalters 6 erhält der Mikrocomputer 3 der tragbaren Sendeeinheit 1 den Befehl, den Algorithmus zur Erzeugung einer Zufallszahl zu starten, wobei die Zufallszahl vom Generator 19 bereit gestellt wird. Gleichzeitig wird unabhängig von dem Algorithmus über die Antenne 9 eine Reizsequenz A an den im Kraftfahrzeug befindlichen Empfänger 2 ausgesandt. Diese Reizsequenz A wird durch die Antenne 21 detektiert und an den Mikroprozessor 11 weitergeleitet, wodurch ebenfalls der Algorithmus im Mikroprozessor 11 und die Erzeugung der Zufallszahl durch den Zufallszahlengenerator 17 aktiviert werden.

Als Reaktion auf den Empfang der Reizsequenz A wird über die Antenne 21 ein Rückmeldesignal 5 an den tragbaren Sender 2 ausgesendet. Sowohl die Reizsequenz A als auch das Rückmeldesignal B stehen in keinem Zusammenhang zur eigentlichen codierten Information.

Nachdem der Mikroprozessor 3 des tragbaren Senders 1 das Rückmeldesignal B erhalten hat, sendet er die zwischenzeitlich mit Hilfe des Algorithmus und der Zufallszahl erzeugte codierte Information an den Empfänger 2 aus. Der Mikroprozessor 11 des Empfängers 2 bewertet die empfangene codierte Information C, indem er sie mit einer codierten Information vergleicht, welche mit Hilfe der von dem Zufallszahlgenerator 17 erzeugten Zufallszahl gebildet wurde. Dabei wurde der gleiche Algorithmus verwendet, wie er auch im Mikroprozessor 3 der tragbaren Sendeeinheit 2 Anwendung findet. Stimmen die übertragene codierte Information und die im Empfänger selbst erzeugte codierte Information überein, so gibt der Mikroprozessor 11 über die Antenne 21 ein Quittungssignal D an den Sender 1 aus. Gleichzeitig werden bei Übereinstimmung der codierten Informationen die Anschlüsse 23 durch den Mikroprozessor 11 aktiviert und die angeschlossene Zentralverriegelung bzw. eine Wegfahrsperre des Kraftfahrzeuges in den gewünschten Zustand versetzt.

Erhält die tragbare Sendeeinheit 1 das Quittungssignal D, weiß der Mikroprozessor 3, dass der Empfänger 2 die codierte Information erhalten hat. Bei der nächstfolgenden Aktivierung durch die Betätigung des Tastschalters 6 kann der Algorithmus weitergeschaltet werden, um so einen neuen Zufallscode zu errechnen.

Alternativ besteht aber auch die Möglichkeit, dass der Algorithmus, welcher zur Bildung der codierten Informationen in der Sendeeinheit 1 bzw. im Empfänger 2 genutzt wird, unabhängig von der Betätigung dem Bedientaste 6 weitergeschaltet wird. Dies kann beispielsweise in Abhängigkeit von Signalen des Taktgenerators 4 der Sendeeinheit 1 bzw. des Taktgenerators 12 in der Empfängereinrichtung 2 geschehen. So können beide Algorithmen nach Ablauf einer vorgegebenen Zahl von Taktimpulsen weitergeschaltet werden. Es besteht aber auch die Möglichkeit, dass der Algorithmus im Mikroprozessor 3 schneller weitergeschaltet wird als der Algorithmus im Empfänger 2.

Da hierbei aber die Gefahr besteht, dass die von der tragbaren Sendeeinheit 1 ausgesandte codierte Information C außerhalb des Fangbereiches des Empfängers 2 liegt, muß gewährleistet werden, dass nach bestimmten Zeiträumen sich der Algorithmus im Mikroprozessor 3 und der Algorithmus im Mikroprozessor 11 sich am selben Ausgangswert befinden, um die Arbeitsweise der Sicherheitseinrichtung zu gewährleisten. Zu diesem Zweck wird nach jedem Betätigen der Bedientaste 6 eine Synchronisierung durchgeführt.

Ist nun die Datenübertragung zwischen dem tragbaren Sender 1 und der Empfängereinrichtung 2 gestört, was dadurch detektiert wird, dass die tragbare Sendeeinheit 1 trotz Aussendung des Reizsignales A kein Rückmeldesignal B enthält oder aber nach Aussendung der codierten Information C kein Quittierungssignal D von der Empfängereinrichtung 2 abgegeben wird, werden zur Erhöhung der Sicherheit der Einrichtung die Algorithmen der Mikroprozessoren 3 bzw. 11 um jeweils n Schritte vorgeschaltet, so dass alle ausgesandten codierten Informationen und eventuell abgehörten Informationen mit Sicherheit in der Vergangenheit liegen.

## Patentansprüche

1. Vorrichtung zur Aktivierung und/oder Deaktivierung einer Sicherheitseinrichtung, insbesondere einer Zugangseinrichtung für ein Kraftfahrzeug, mit einer tragbaren Sendeeinheit zum Senden einer codierten Information, welche von einer Empfängervorrichtung empfangen und mit einer vorgegebenen codierten Information verglichen wird, wobei von der Empfängervorrichtung im Fall der Übereinstimmung beider Informationen ein Ansteuersignal an die Sicherheitseinrichtung abgebbar ist, **dadurch gekennzeichnet**, dass die tragbare Sendeeinheit (1) zum Aufbau einer bidirektionalen Datenübertragungsstrecke eine Reizsequenz (A) ausstrahlt, welche nach dem Empfang durch die Empfängereinrichtung (2) mit einem Rückmeldesignal (B) beantwortet wird, wobei die tragbare Sendeeinheit (1) nach Erhalt des Rückmeldesignals (B) die codierte Information (C) aussendet.

2. Vorrichtung nach Anspruch 1, **dadurch gekennzeichnet**, dass die Reizsequenz (A), das Rückmeldesignal (B) und die codierte Information (C) in annähernd dem gleichem Frequenzbereich gesendet werden.

3. Vorrichtung nach Anspruch 1, **dadurch gekennzeichnet**, dass in der tragbaren Sendeeinheit (1) und in der Empfängervorrichtung (2) jeweils ein Codegenerator (19, 17) angeordnet ist, wobei der erste Codegenerator (19) der tragbaren Sendeeinheit (1) die zu übertragende codierte Information (C) und der zweite Codegenerator (17) der Empfängervorrichtung (2) die vorgegebene codierte Information erzeugt, wobei beide Codegeneratoren (19, 17) nach dem gleichen Algorithmus arbeiten.

4. Vorrichtung nach Anspruch 3, **dadurch gekennzeichnet**, dass der Algorithmus zur mehrmaligen Abwandlung der zu übertragenden codierten Information und der vorgegebenen codierten Information angewendet wird.

5. Vorrichtung nach Anspruch 3, **dadurch gekennzeichnet**, dass der Algorithmus zur Abwandlung der zu übertragenden codierten Informationen und der vorgegebenen codierten Informationen nach jeder Aktion der tragbaren Sendeeinheit geändert wird.

6. Vorrichtung nach Anspruch 3, **dadurch gekennzeichnet**, dass der erste und der zweite Codegenerator (19, 17) zeitgesteuert die zu übertragende codierte Information und die vorgegebene codierte Information weiterschalten.

7. Vorrichtung nach Anspruch 6, **dadurch gekennzeichnet**, dass der Zeittakt des ersten Codegenerators (19) der tragbaren Sendeeinheit (1) höher ist als der Zeittakt des zweiten Codegenerators (17) der Empfängereinrichtung (2).

8. Vorrichtung nach Anspruch 1 und 7, **dadurch gekennzeichnet**, dass der erste und der zweite Codegenerator (19, 17) nach Ausgabe des Ansteuersignals durch die Empfängereinrichtung (2) auf einen gemeinsamen Wert gesetzt werden.

9. Vorrichtung nach Anspruch 1 und 3, **dadurch gekennzeichnet**, dass bei Ausbleiben eines den Empfang der zu übertragenden codierten Information (C) bestätigenden Quittungssignals (D) der Empfängereinrichtung (2) der erste Codegenerator (19) der tragbaren Sendeeinheit (1) weitergeschaltet wird.

10. Vorrichtung nach Anspruch 1 und 3, **dadurch gekennzeichnet**, dass bei Ausbleiben der zu übertragenden codierten Information (C) trotz Aussendung des Rückmeldesignals (B) durch die Empfängervorrichtung (2) der zweite Codegenerator (19) der Empfängervorrichtung (2) weitergeschaltet wird.

11. Vorrichtung nach Anspruch 9 und 10, **dadurch gekennzeichnet**, dass der erste und der zweite Codegenerator (19, 17) um die gleiche Anzahl von Schritten weitergeschaltet werden.
